# EUROPÄISCHE PATENTSCHRIFT

(11) **EP 2 040 970 B1**
(45) Veröffentlichungstag und Bekanntmachung des Hinweises auf die Patenterteilung: **27.05.2015**
(21) Anmeldenummer: 07787649.8
(22) Anmeldetag: 17.07.2007
(51) Int. Cl.: B62D 1/16, B62D 25/14

(54) **ANORDNUNG ZUR BEFESTIGUNG EINER LENKSÄULE EINES KRAFTFAHRZEUGES**
ARRANGEMENT FOR FASTENING OF A STEERING COLUMN OF A VEHICLE
DISPOSITIF DE FIXATION D'UNE COLONNE DE DIRECTION D'UN VÉHICULE AUTOMOBILE

(30) Priorität: 18.07.2006 DE 102006033606
(43) Veröffentlichungstag der Anmeldung: 01.04.2009
(73) Patentinhaber: Johnson Controls GmbH, 52399 Burscheid (DE); ThyssenKrupp Presta Aktiengesellschaft, 9492 Eschen (LI)
(72) Erfinder: ZÖRNACK, Markus, 44369 Dortmund (DE); HIRT, Mark, 44791 Bochum (DE); SEYFRIED, Peter, 10439 Berlin (DE); DORNSCHEIDT, Christian, 40629 Düsseldorf (DE); HEIN, Matthias, 45888 Gelsenkirchen (DE); HINZ, Martin, 47661 Issum (DE); ANGENHEISTER, Paul, 47906 Kempen (DE); BEER, Thomas, 47929 Grefrath (DE); MAI, Alfred, 42499 Hückeswagen (DE); KIERSPEL, Klaus, 51503 Rösrath (DE); SILVA, Norberto, 45327 Essen (DE); ZIMMERMANN, Jochen, 42399 Wuppertal (DE); ARBANAS, Viktor, CH-5400 Baden (CH); MAAG, Michael, 8280 Kreuzlongen (CH); MANNECK, Carsten, A-6800 Feldkirch (AT); OERTLE, Max, FL-9493 Mauren (LI)
(74) Vertreter: Cohausz & Florack
(86) Internationale Anmeldenummer: PCT/EP2007/057383
(87) Internationale Veröffentlichungsnummer: WO 2008/009683

(56) Entgegenhaltungen:
- EP-A2- 1 203 711
- DE-U1- 20 219 491

## Beschreibung

Die Erfindung betrifft eine Anordnung zur Befestigung einer Lenksäule an einem Querträger, insbesondere an einem Cockpitträger, eines Kraftfahrzeuges, wobei die Lenksäule Haltemittel aufweist. Darüber hinaus betrifft die Erfindung eine vorteilhafte Verwendung der erfindungsgemäßen Anordnung zur Befestigung einer Lenksäule.

Die Lenksäule eines Kraftfahrzeuges wird üblicherweise unterhalb eines Querträgers des Kraftfahrzeuges angeordnet und an diesem befestigt. Zur Befestigung der Lenksäule an diesem Querträger, welcher auch als Cockpitträger ausgebildet sein kann, sind üblicherweise Haltevorrichtungen vorgesehen, welche mit dem Querträger häufig stoffschlüssig, beispielsweise durch eine Schweißverbindung, verbunden sind. Beispielsweise ist aus der deutschen Patentschrift DE 102 53 959 B4 eine Anordnung zur Befestigung einer Lenksäule an einem Querträger eines Kraftfahrzeuges bekannt, bei welcher ein zusätzliches Trägerelement auf den Querträger geschweißt ist, welches die Haltemittel der Lenksäule aufnimmt. Aus der veröffentlichten europäischen Patentanmeldung EP 1 234 744 A2 ist darüber hinaus eine Lenksäulenhalterung bekannt, welche aus einer auf dem Querträger geschweißten Halteklammer besteht, an welcher die Lenksäule über einen unterhalb der Lenksäule angeordneten Lenksäulenhalter befestigt wird.

Aus dem deutschen Gebrauchsmuster DE 202 19 491 U1 ist ferner eine Lenksäulenlagerung bekannt, bei welcher ein Lagerbock an einem Querträger angeordnet ist. Einzelheiten hinsichtlich der Befestigung des Lagerbocks sind aus der Gebrauchsmusterschrift nicht bekannt.

Die europäische Patentanmeldung EP 1 203 711 A2 zeigt ebenfalls eine Lenksäulenanbindung. Hinweise auf die konkrete Ausbildung der Anbindung der Lenksäule im Querträger fehlen allerdings.

Die deutsche Offenlegungsschrift DE 102 00 890 A1 zeigt eine Anbindung einer Lenksäule an einen Querträger mit einer Verstärkung, welche über tellerförmige Enden den Querträger im Inneren an jeweils gegenüberliegenden Seiten des Querträgers abstützt. Diese muss vor der Montage der Lenksäulenanbindung aufwändig im Querträger angeordnet werden.

In der europäischen Patentanmeldung EP 1 228 948 A1 wird eine in einem Aufnahmedurchbruch eines Querträgers angeordnete Schnappmutter bzw. Nietmutter offenbart, welche zur Befestigung von Anbauteilen an dem Querträger dient.

Problematisch bei den bekannten Anordnungen zur Befestigung einer Lenksäule an einem Querträger ist nun, dass diese zusätzliche, komplexe Trägerelemente oder Halteklammern aufweisen, welche mit dem Querträger fest verschweißt sind, um die Lenksäule an diesem zu befestigen. Dadurch resultieren nicht nur zusätzliche Herstellungsschritte bei der Herstellung des Querträgers, darüber hinaus wird die Flexibilität im Hinblick auf die Verwendung des Querträgers auf einen einzigen Fahrzeugtyp mit einer bestimmten Lenksäulenanordnung eingeschränkt. Ferner ist der Materialbedarf für die bekannten Anordnungen zur Befestigungen einer Lenksäule am Querträger eines Kraftfahrzeuges relativ hoch, was sich in erhöhten Kosten niederschlägt.

Hiervon ausgehend liegt der vorliegenden Erfindung die Aufgabe zugrunde, eine Anordnung zur Befestigung einer Lenksäule an einem Querträger, insbesondere an einem Cockpitträger, eines Kraftfahrzeuges zur Verfügung zu stellen, welche einerseits mit einfachen Mitteln eine Befestigung der Lenksäule an dem Querträger des Kraftfahrzeuges ermöglicht und andererseits bei weiterer Kosten- und Gewichtsreduzierung eine hohe Flexibilität in Bezug auf die Verwendung des Querträgers und der Lenksäule für unterschiedliche Kraftfahrzeuge ermöglicht.

Die oben hergeleitete und aufgezeigte Aufgabe wird gemäß einer ersten Lehre der vorliegenden Erfindung durch eine Anordnung zur Befestigung einer Lenksäule an einem Querträger, insbesondere einem Cockpitträger mit den Merkmalen des Patentanspruches 1 gelöst.

Im Gegensatz zu den bisher bekannten Lösungen zur Befestigung der Lenksäule an einem Querträger eines Kraftfahrzeuges wird die Lenksäule erfindungsgemäß über deren Haltemittel unmittelbar mit dem Querträger durch Befestigungsmittel verbunden. Als Befestigungsmittel sind Schrauben vorgesehen. Neben Schrauben können hier zusätzlich Nieten vorgesehen sein. Zusätzliche Trägerelemente oder Halterungen, welche auf den Querträger geschweißt werden müssen, sind erfindungsgemäß nicht notwendig, so dass sich die Kosten und das Gewicht für die Befestigung der Lenksäule am Querträger eines Kraftfahrzeuges deutlich verringern. Beispielsweise kann mit einem einzigen Loch bzw. einer Öffnung im Querträger durch die Verwendung einer einzigen Schraube zur Befestigung der Haltemittel der Lenksäule am Querträger eine besonders einfache Lösung zur Anbindung der Lenksäule am Querträger ermöglicht werden.

Zweckmäßig kann aber auch die Verwendung von zwei oder mehreren Löchern am Querträger sein, um eine Mehrzahl an Schrauben zur Anbindung der Lenksäule an den Querträger zu nutzen. Neben Schrauben können hier zusätzlich Nieten als Befestigungsmittel verwendet werden. Dadurch, dass am Querträger lediglich quer zur Längsrichtung des Querträgers verlaufende Löcher oder Öffnungen für die Befestigungsmittel vorgesehen werden müssen, kann der Querträger für eine Vielzahl von Kraftfahrzeugen eingesetzt werden, wobei die Löcher bzw. Öffnungen entsprechend der Anordnung der Lenksäule für jeden einzelnen Kraftfahrzeugtyp positioniert seien können. Als zusätzliche Befestigungsmittel können beispielsweise Blindnieten verwendet werden, die relativ einfach und schnell eine Anbindung an die Lenksäule an einem Querträger ermöglichen. Ferner ist aufgrund der einfachen erfindungsgemäßen Befestigung der Lenksäule denkbar, die Haltemittel der Lenksäule so auszugestalten, dass diese mehrere Befestigungspositionen an den Löchern des Querträgers abhängig vom Fahrzeugtyp ermöglichen. Es wird deutlich, dass die Flexibilität beim Einsatz des Querträgers und/oder der Lenksäule für verschiedene Kraftfahrzeugtypen deutlich erhöht wird und damit die Kosten für die Befestigung der Lenksäule am Querträger eines Kraftfahrzeugs weiter gesenkt werden können. Zudem können die Kosten für die Herstellung eines Kraftfahrzeuges gesenkt werden, wenn der Querträger als Cockpitträger ausgebildet ist und damit gleichzeitig als Aufnahme für das Cockpit dient.

Weist der Querträger mindestens ein Durchgangsloch auf und ist für mindestens ein Befestigungsmittel eine Hülse vorgesehen, welche von der Stirnseite durch das Durchgangsloch gesteckt ist, kann die Montage der Lenksäule erleichtert und die Kosten zur Herstellung des Querträgers verringert werden. Vorzugsweise wird die Hülse auf einer Seite oder auf beiden Seiten des Querträgers verschweißt.

Weist der Querträger mindestens ein Durchgangsloch auf, kann eine Durchgangsschraube als Befestigungsmittel verwendet werden. Beispielsweise kann der Querträger aber auch mit einer Mehrzahl an Durchgangslöchern einfach für den Einsatz in mehreren Fahrzeugtypen vorbereitet werden. Die Verwendung mehrerer, insbesondere zweier Durchgangsschrauben verbessert ferner noch die Anbindung der Lenksäule in Bezug auf deren Stabilität, deren Eigenfrequenzen bzw. Eigenresonanzen.

Gemäß einer weiteren Ausgestaltung der erfindungsgemäßen Anordnung zur Befestigung einer Lenksäule an einem Querträger eines Kraftfahrzeuges, bestehen der Querträger und/oder die Haltemittel zumindest teilweise aus Metall, insbesondere Stahl oder einer Stahllegierung, um die notwendigen Festigkeiten aufzuweisen. Vorzugsweise werden der Querträger und/oder die Haltemittel durch offene oder geschlossene Profile aus Metall gebildet.

Eine besonders einfache Befestigung der Lenksäule an dem Querträger eines Kraftfahrzeuges wird dadurch erreicht, dass die Haltemittel mindestens einen Flansch, vorzugsweise zwei Flansche, mit mindestens einem Loch für mindestens ein Befestigungsmittel, insbesondere eine Schraube und/oder eine Niete aufweisen. Werden zwei Flansche verwendet, kann beispielsweise eine Durchgangsschraube sowohl an der ersten als auch an dem zweiten Flansch mit dem Querträger verschraubt sein, so dass eine besonders gute Verbindung zwischen den Haltemitteln der Lenksäule und dem Querträger erzielt wird. Selbstverständlich ist es auch möglich den oder die Flansche über Schrauben oder Nieten mit dem Querträger zu befestigen, welche nicht den gesamten Querträger durchlaufen. Darüber hinaus können sowohl bei der Verwendung von einem Flansch als auch bei zwei oder mehreren Flanschen eine Mehrzahl von Schrauben, Durchgangsschrauben verwendet werden. Neben Schrauben oder Durchgangsschrauben können hier zusätzlich Nieten als Befestigungsmittel verwendet werden.

Ist für die mindestens eine Schraube eine Hülse, insbesondere eine Schraubenhülse vorgesehen, welche vorzugsweise durchgehend ausgeführt ist, kann die Montage der Lenksäule an dem Querträger vereinfacht werden, da diese zum einen eine einfache Führung beispielsweise einer Durchgangsschraube durch den Querträger zur Anbindung der Lenksäule ermöglicht. Zusätzlich kann die Torsionssteifigkeit der Verbindung Querträger-Lenksäule verbessert werden.

Eine weitere Ausgestaltung der Erfindung sieht vor, Hülsen oder Schraubenhülsen zu verwenden, welche ein Innengewinde aufweisen. Beispielsweise können so, zwei relativ kurze Schrauben mit der Hülse oder eine kurze Schraube mit einer langen Schraubenhülse verwendet werden, so dass die Montage gut an die im Kraftfahrzeug vorhandenen Platzverhältnisse angepasst werden kann.

Über ein Punkt- oder Buckelschweißen kann die Schraubverbindung gesichert werden, wenn mindestens eine Schweißmutter zur Befestigung der Schrauben vorgesehen ist. Die Schweißmutter kann hierzu beispielsweise unmittelbar am Haltemittel der Lenksäule angeheftet werden. Falls erforderlich, kann eine abschließende Schweißung der Haltemittel zur weiteren Erhöhung der Steifigkeit der Verbindung Lenksäule-Querträger führen.

Eine weitere Ausgestaltung der erfindungsgemäßen Anordnung besteht darin, dass auf der Innenseite des Querträgers stoff- und/oder form- oder kraftschlüssig mit dem Querträger verbundene Muttern, beispielsweise Schweißmuttern vorgesehen sind, so dass nur kurze Schrauben zur Befestigung benötigt werden.

Sind im Bereich der Löcher oder Öffnungen am Querträger Verstärkungen vorgesehen, können höhere Anziehdrehmomente beim Befestigen der Schrauben verwendet werden, ohne zu Beschädigungen im Bereich der Löcher oder Öffnungen des Querträgers zu führen. Darüber hinaus verbessern die Verstärkungen im Bereich der Löcher die Festigkeit des Querträgers deutlich. Die Verstärkungen können durch innen- oder außenliegend angebrachte Verstärkungselemente realisiert werden, wobei die Verstärkungselemente beispielsweise vor der Umformung des Bleches zu einem den Querträger bildenden Hohlprofil auf dem Blech stoff-, form- oder kraftschlüssig befestigt und mit diesem umgeformt werden.

Eine erfindungsgemäße Anordnung sieht vor, dass im Bereich der Löcher bzw. Öffnungen am Querträger durchgehende Schraubenhülsen als Verstärkung in Kraftaufnahmepunkten vorgesehen sind. Dazu sind die Schraubenhülsen fest mit dem Querträger verbunden, beispielsweise geschweißt, gelötet oder eingepresst und bilden so verstärkte Kraftaufnahmepunkte am Querträger.

Schließlich wird die oben aufgezeigte Aufgabe, gemäß einer zweiten Lehre der vorliegenden Erfindung, durch die Verwendung einer erfindungsgemäßen Anordnung zur Befestigung einer Lenksäule an einem Querträger eines Kraftfahrzeuges in einer modularen Cockpitstruktur gelöst.

Eine modulare Cockpitstruktur ist bereits durch ihren modulartigen Aufbau gekennzeichnet, welcher eine Anpassung des Cockpits durch Verwendung unterschiedlicher, aufeinander abgestimmter Bauteile ermöglicht. Durch die Mehrfachverwendung einzelner Cockpitmodule für unterschiedliche Kraftfahrzeuge, wie beispielsweise dem Quer- oder Cockpitträger, wird bereits eine Verringerung der Herstellkosten für die Cockpitstruktur erzielt. Die erfindungsgemäße Anordnung zur Befestigung der Lenksäule an einem Querträger eines Kraftfahrzeuges ist auf die modulartige Verwendung besonders gut vorbereitet, weil durch sie über besonders einfache Befestigungsmittel, nämlich über Schrauben, zusätzliche Nieten und/oder Durchgangsschrauben, die Lenksäule unmittelbar am Querträger befestigt wird. Damit benötigt die erfindungsgemäße Anordnung zur Befestigung einer Lenksäule an einem Querträger oder einem Cockpitträger eines Kraftfahrzeuges, wie oben bereits ausgeführt, keine zusätzlichen auf dem Querträger befestigten Trägerelemente oder Halterungen. Mithin wird ermöglicht, dass der Querträger sowie auch die Lenksäule für verschiedene Kraftfahrzeugtypen unmittelbar einsetzbar sind, so dass eine maximale Flexibilität und geringe Kosten der Cockpitstruktur gewährleistet werden.

Es gibt nun eine Vielzahl von Möglichkeiten die erfindungsgemäße Anordnung zur Befestigung einer Lenksäule an einem Querträger, insbesondere Cockpitträger, eines Kraftfahrzeuges sowie die erfindungsgemäße Verwendung derselben weiterzubilden und auszugestalten. Hierzu wird verwiesen einerseits auf die dem Patentanspruch 1 nachgeordneten Patentansprüche, andererseits auf die Beschreibung eines Ausführungsbeispiels einer erfindungsgemäßen Anordnung zur Befestigung einer Lenksäule an einem Querträger eines Kraftfahrzeuges in Verbindung mit der Zeichnung. Die Zeichnung zeigt in
- Fig. 1: ein Ausführungsbeispiel einer erfindungsgemäßen Anordnung zur Befestigung der Lenksäule an einem Cockpitträger eines Kraftfahrzeuges in einer perspektivischen Ansicht,
- Fig. 2: einen Ausschnitt aus der Zeichnung Fig. 1 in vergrößerter Darstellung und
- Fig. 3: in einer Schnittansicht quer zur Axialrichtung des Querträgers entlang der Schnittlinie A-A des Ausführungsbeispiels aus Fig. 1 im Bereich einer Durchgangsschraube.

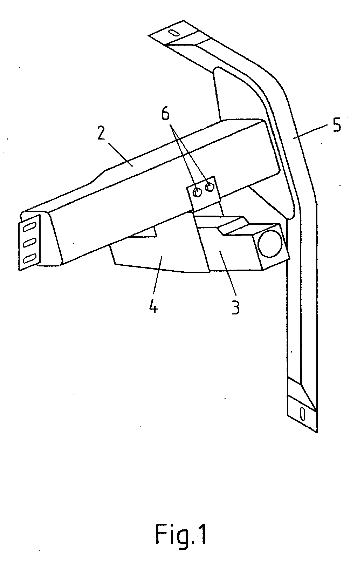

In Fig. 1 ist zunächst in einer perspektivischen Ansicht eine modular aufgebaute Cockpitstruktur 1 dargestellt, welche aus einem Querträger 2 mit zwei integrierten, durchgehenden Hülsen 8, einer Lenksäule 3, deren Haltemittel 4 und einem Abstützelement 5 besteht. Die Lenksäule 3 ist über die Haltemittel 4 mittels zwei durch die Hülsen 8 verlaufende Durchgangsschrauben 6 an dem Querträger 2 befestigt. Die Befestigung der Lenksäule 3 erfolgt dabei über einen Flansch 7 der Haltemittel 4. Der Querträger 2 dient im vorliegenden Ausführungsbeispiel auch gleichzeitig als Aufnahme für das Cockpit und stellt insofern einen Cockpitträger dar.

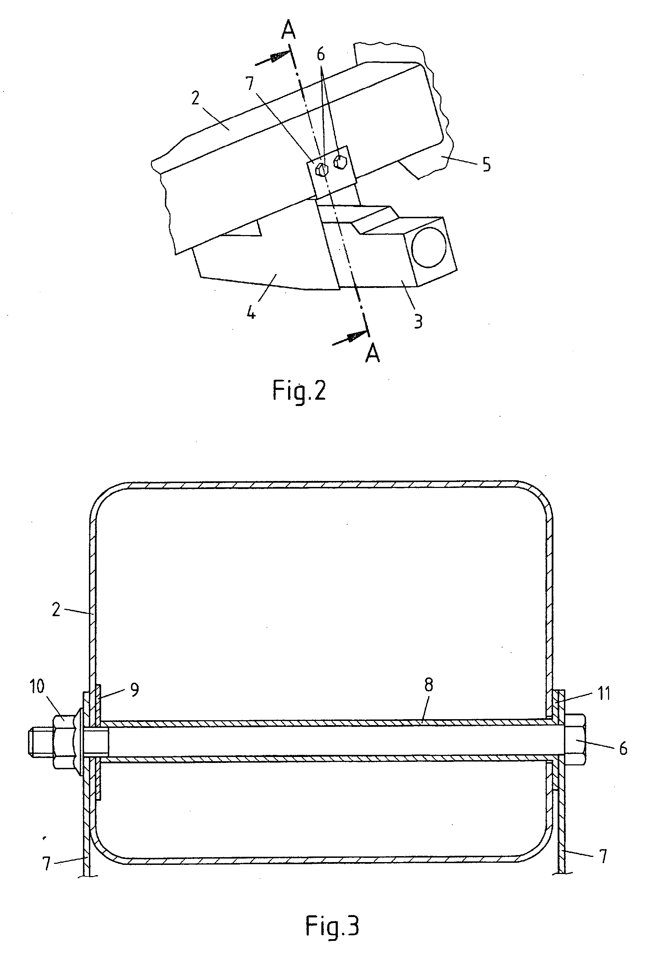

Wie in dem vergrößerten Ausschnitt der Fig. 1, welcher in Fig. 2 dargestellt ist, zu erkennen ist, werden die Haltemittel 4 der Lenksäule 3 durch ein vorzugsweise aus Metall, insbesondere Stahl oder einer Stahllegierung bestehendes Bauteil gebildet. Die Befestigung der Haltemittel 4 der Lenksäule 3 an dem Querträger 2 erfolgt über zwei den Querträger 2 umschließenden Flansche 7.

Eine in Fig. 3 dargestellte Schnittansicht entlang eines Schnittes quer zur Axialrichtung des Querträgers 2 im Bereich einer Durchgangsschraube 6 entlang der Schnittlinie A-A zeigt die gegenüberliegenden Flansche 7 der Haltemittel 4 der Lenksäule 3 und eine der durch den Querträger 2 verlaufenden durchgehenden Hülsen 8. Die Hülsen 8 sind im Ausführungsbeispiel von der Stirnseite durch das Durchgangsloch durchgesteckt und liegen sowohl mit dem Kragen der Hülse 11 an der Stirnseite an als auch auf der gegenüberliegenden Seite an der Innenseite des Querträgers 2 bzw. an der Verstärkung 9 an.

An diesen anliegenden Stellen sind die Hülsen 8 beispielsweise gefügt, insbesondere durch Buckelschweißen. Die direkte Anbindung ohne weitere Halter und Trägerelemente der Haltemittel 4 der Lenksäule 3 an den Querträger 2 durch die Flansche 7 und die Durchgangsschraube 6 in Kombination mit der Hülse 8 ermöglichen eine sehr torsionssteife Verbindung der Lenksäule 3 mit dem Querträger 2, da diese die Funktion einer Führung zum Durchstecken der Durchgangsschraube 6 durch den Querträger 2 übernehmen.

Gemäß der Erfindung wird die Hülse 8 auf mindestens einer Seite des Querträgers 2 festgeschweißt. Als Schweißverfahren sind neben dem Buckelschweißen insbesondere auch das Laserschweißen, Reibschweißen aber auch andere Schweißverfahren geeignet.

Zur Verstärkung der Wand des Querträgers 2 im Bereich der Durchgangsschraube können Verstärkungselemente 9, beispielsweise wie vorliegend im Inneren des Querträgers 2, vorgesehen sein, um beispielsweise eine höhere lokale Steifigkeit des Querträgers 2 zu gewährleisten. Ebenso sind jedoch auch außenliegende Verstärkungselemente 9 denkbar. Die Mutter 10 wird vorzugsweise als Schweißmutter ausgebildet und auf dem Flansch 7 der Haltemittel 4 der Lenksäule 3 aufgeschweißt, z.B. mittels Punkt- oder Buckelschweißen. Angezogen wird die Durchgangsschraube 6 über den Schraubenkopf.

Die erfindungsgemäße Anordnung zur Befestigung der Lenksäule an dem Querträger ist insbesondere bei der modularen Cockpitstruktur 1 vorteilhaft, da der Querträger 2 durch einfache Variation des Lochbeschnitts an die entsprechende Aufnahme unterschiedlicher Lenksäule angepasst werden kann, ohne das aufwändige angeschweißte Trägerelemente oder Halterungen notwendig sind. Zudem wird durch die erfindungsgemäße Befestigung der Lenksäule am Querträger bei einfachem Aufbau durch günstigen Materialeinsatz ein verringertes Gewicht bei gleichzeitig sehr guter Torsionssteifigkeit und damit sehr guten Eigenfrequenz-Eigenschaften erzielt.

## Patentansprüche

1. Anordnung zur Befestigung einer Lenksäule an einem Querträger, insbesondere an einem Cockpitträger, eines Kraftfahrzeuges, wobei die Lenksäule Haltemittel aufweist, der Querträger (2) zur Befestigung der Lenksäule (3) mindestens ein quer zur Längsrichtung des Querträgers verlaufendes Durchgangsloch für mindestens ein Befestigungsmittel (6) aufweist und die Haltemittel (4) der Lenksäule (3) über mindestens ein Befestigungsmittel (6) am Querträger (2) befestigt sind, für mindestens ein Befestigungsmittel (6) eine Hülse (8) vorgesehen ist,
**dadurch gekennzeichnet, dass**
die Hülse (8) von der Stirnseite in das Durchgangsloch gesteckt ist und quer durch den Querträger verläuft derart, dass die Hülse mit einem Kragen (11) von außen an der Stirnseite des Durchgangslochs (9) anliegt und auf der gegenüberliegenden Seite im Inneren des Querträgers oder an einer im Inneren des Querträgers angeordneten Verstärkung anliegt, wobei die Hülse (8) auf einer oder beiden Seiten des Querträgers verschweißt ist.

2. Anordnung zur Befestigung einer Lenksäule nach Anspruch 1,
**dadurch gekennzeichnet, dass**
Durchgangsschrauben als Befestigungsmittel (6) vorgesehen sind.

3. Anordnung zur Befestigung einer Lenksäule nach Anspruch 1 oder 2,
**dadurch gekennzeichnet, dass**
der Querträger (2) und/oder die Haltemittel (4) zumindest teilweise aus Metall, insbesondere Stahl oder einer Stahllegierung, bestehen.

4. Anordnung zur Befestigung einer Lenksäule nach einem der Ansprüche 1 bis 3,
**dadurch gekennzeichnet, dass**
die Haltemittel (4) mindestens einen Flansch (7), vorzugsweise zwei Flansche (7), mit mindestens einem Loch für das mindestens eine Befestigungsmittel (6) aufweisen.

5. Anordnung zur Befestigung einer Lenksäule nach einem der Ansprüche 2 bis 4,
**dadurch gekennzeichnet, dass**
als mindestens eine Hülse eine Schraubenhülse (8) vorgesehen ist.

6. Anordnung zur Befestigung einer Lenksäule nach einem der Ansprüche 2 bis 5,
**dadurch gekennzeichnet, dass**
die Hülse oder Schraubenhülse (8) ein Innengewinde aufweist.

7. Anordnung zur Befestigung einer Lenksäule nach einem der Ansprüche 2 bis 5,
**dadurch gekennzeichnet, dass**
mindestens eine Schweißmutter (10) zur Befestigung der Durchgangsschrauben (6) vorgesehen ist.

8. Anordnung zur Befestigung einer Lenksäule nach Anspruch 7,
**dadurch gekennzeichnet, dass**
mindestens eine Schweißmutter (10) auf der Innenseite des Querträgers (2) vorgesehen ist.

9. Anordnung zur Befestigung einer Lenksäule nach einem der Ansprüche 1 bis 8,
**dadurch gekennzeichnet, dass**
im Bereich der Durchgangslöcher am Querträger (2) Verstärkungen (9) vorgesehen sind.

10. Anordnung zur Befestigung einer Lenksäule nach Anspruch 5 oder 9,
**dadurch gekennzeichnet, dass**
im Bereich der Durchgangslöcher am Querträger (2) Schraubenhülsen (8) als Verstärkung (9) in Kraftaufnahmepunkten vorgesehen sind.

11. Verwendung einer Anordnung zur Befestigung einer Lenksäule nach einem der Ansprüche 1 bis 10 in einer modularen Cockpitstruktur.

## Claims

1. Arrangement for securing a steering column to a cross member, in particular to a cockpit carrying member, of a motor vehicle, wherein the steering column has retaining means, the cross member (2) has, for securing the steering column (3), at least one clearance hole running transverse to the longitudinal direction of the cross member for at least one securing means (6), and the retaining means (4) of the steering column (3) are secured by at least one securing means (6) to the cross member (2), wherein a sleeve (8) is provided for at least one securing means (6),
**characterized in that**
the sleeve (8) is inserted through said clearance hole from the outer face side and runs transversely through the cross member, such that the sleeve abuts from the outside with a collar (11) to the outer face side of the clearance hole (9), and to the opposite side in the inner side of the cross member or to a reinforcement disposed in the inner side of the cross member, wherein the sleeve (8) is welded on one or both sides of the cross member.

2. Arrangement for securing a steering column according to claim 1, **characterized in that** transit bolts are provided as securing means (6).

3. Arrangement for securing a steering column according to claim 1 or 2, **characterized in that** the cross member (2) and/or the retaining means (4) are comprised at least partially of metal, in particular steel or a steel alloy.

4. Arrangement for securing a steering column according to any one of claims 1 to 3, **characterized in that** the retaining means (4) have at least one flange (7), preferably two flanges (7), with at least one hole for the at least one securing means (6).

5. Arrangement for securing a steering column according to any one of claims 2 to 4, **characterized in that** as at least one sleeve a bolt sleeve (8) is provided.

6. Arrangement for securing a steering column according to any one of claims 2 to 5, **characterized in that** the sleeve or bolt sleeve has an internal thread.

7. Arrangement for securing a steering column according to any one of claims 2 to 5, **characterized in that** at least one weld nut (10) is provided for securing the transit bolts (6).

8. Arrangement for securing a steering column according to claim 7, **characterized in that** at least one weld nut (10) is provided on the inner side of the cross member (2).

9. Arrangement for securing a steering column according to any one of claims 1 to 8, **characterized in that** reinforcements (9) are provided at the cross member (2) in the area of the clearance holes.

10. Arrangement for securing a steering column according to claim 5 or 9, **characterized in that** bolt sleeves (8) are provided as reinforcement (9) at force accommodation points at the cross member (2) in the area of the clearance holes.

11. Use of an arrangement for securing a steering column according to any one of Claims 1 to 10 in a modular cockpit structure.

## Revendications

1. Dispositif pour fixer une colonne de direction sur une traverse, en particulier sur un support de poste de conduite d'un véhicule, pour lequel la colonne de direction comporte des moyens de retenue, la traverse (2) comporte pour la fixation de la colonne de direction (3) au moins un trou de passage passant transversalement à la direction longitudinale de la traverse pour au moins un moyen de fixation (6) et les moyens de retenue (4) de la colonne de direction (3) sont fixés à la traverse (2) par au moins un moyen de fixation (6), un manchon (8) étant prévu pour au moins un moyen de fixation (6),
**caractérisé en ce que** le manchon (8) est introduit dans le trou de passage par la face avant et passe transversalement à travers la traverse de telle manière que le manchon avec une collerette (11) s'applique de l'extérieur à la face avant du trou de passage (9) et s'applique à la face opposée à l'intérieur de la traverse ou à un renfort disposé à l'intérieur de la traverse, le manchon (8) étant soudé sur un ou sur les deux côtés de la traverse.

2. Dispositif pour fixer une colonne de direction selon la revendication 1 **caractérisé en ce que** des vis traversantes sont prévues en tant que moyens de fixation (6).

3. Dispositif pour fixer une colonne de direction selon la revendication 1 ou 2 **caractérisé en ce que** la traverse (2) et/ou les moyens de retenue (4) sont au moins en partie en métal, en particulier en acier ou en alliage d'acier.

4. Dispositif pour fixer une colonne de direction selon l'une quelconque des revendications 1 à 3 **caractérisé en ce que** les moyens de retenue (4) comportent au moins une bride (7), de préférence deux brides (7), avec au moins un trou pour le au moins un moyen de fixation (6).

5. Dispositif pour fixer une colonne de direction selon selon l'une quelconque des revendications 2 à 4 **caractérisé en ce qu'**un manchon à vis (8) est prévu en tant qu'au moins un manchon.

6. Dispositif pour fixer une colonne de direction selon selon l'une quelconque des revendications 2 à 5 **caractérisé en ce que** le manchon ou manchon à vis (8) comporte un filetage intérieur.

7. Dispositif pour fixer une colonne de direction selon selon l'une quelconque des revendications 2 à 5 **caractérisé en ce qu'**au moins un écrou à souder (10) est prévu pour la fixation des vis traversantes (6).

8. Dispositif pour fixer une colonne de direction selon selon la revendication 7 **caractérisé en ce qu'**au moins un écrou à souder (10) est prévu sur la face intérieure de la traverse (2).

9. Dispositif pour fixer une colonne de direction selon selon l'une quelconque des revendications 1 à 8 **caractérisé en ce que** des renforts (9) sont prévus sur la traverse (2) dans la zone des trous de passage.

10. Dispositif pour fixer une colonne de direction selon selon la revendication 5 ou 9 **caractérisé en ce que** dans la zone des trous de passage sur la traverse (2) des manchons à vis (8) sont prévus comme renfort (9) dans les points de prise de force.

11. Utilisation d'un dispositif pour fixer une colonne de direction selon l'une quelconque des revendications 1 à 10 dans une structure de poste de conduite modulaire.
